# EUROPÄISCHE PATENTSCHRIFT

(11) **EP 0 885 157 B1**
(45) Veröffentlichungstag und Bekanntmachung des Hinweises auf die Patenterteilung: **19.11.2003**
(21) Anmeldenummer: 97942748.1
(22) Anmeldetag: 10.10.1997
(51) Int. Cl.: B65G 1/06, F16G 13/02

(54) **KETTENFÖRDERER**
CHAIN CONVEYOR
TRANSPORTEUR A CHAINE

(30) Priorität: 27.11.1996 CH 291596
(43) Veröffentlichungstag der Anmeldung: 23.12.1998
(73) Patentinhaber: Gilgen Logistics Systems AG, 3173 Oberwangen (CH)
(72) Erfinder: HALDIMANN, Hans-Rudolf, CH-6900 Lugano (CH)
(74) Vertreter: Rottmann, Maximilian R.
(86) Internationale Anmeldenummer: CH9700385
(87) Internationale Veröffentlichungsnummer: WO98023507

(56) Entgegenhaltungen:
- WO-A-89/11602
- WO-A-94/00370
- GB-A- 495 894

## Beschreibung

Die Erfindung betrifft einen Kettenförderer gemäss dem Oberbegriff des Anspruchs 1.

Die hier zur Rede stehenden Kettenförderer werden im allgemeinen in Lagerfächern von Regallageranlagen eingesetzt, wo sie als Fördermittel für die einzulagernden Güter dienen. Das Fördermittel ist üblicherweise über zwei Umlenkungen zu einem Endlos-Fördermittel geschlauft, wobei als eigentliches Fördermittel eine mit Rollen versehene Förderkette vorgesehen ist. Um Kosten und Gewicht zu sparen ist jedoch nicht das gesamte, umlaufende Fördermittel als Kette ausgebildet, sondern nur etwa die Hälfte, währenddem die andere Hälfte durch ein Gurtband gebildet wird.

Als Untersatz für die einzulagernden Güter kommen meist Paletten zum Einsatz. Beim Einlagern der Güter werden letztere auf die Förderkette gelegt und, meistens von einem Gabelstapler, in das Regal hineingeschoben. Bei Bedarf werden die Güter von diesem Gabelstapler auch wieder herausgezogen.

Aus der WO 94/00370 ist ein "Palettentragschiene zur Förderung von Paletten und Behältern" genannter, gattungsgemässer Kettenförderer bekannt. Dieser ist mit einer Rollenkette versehen, deren Tragrollen paarweise auf beiden Seiten durch ein Paar von Seitenlaschen verbunden sind, wobei jedes zweite Glied der Kette als Traglasche ausgebildet ist, auf welcher die einzulagernden Güter abgestützt werden können. Die Seitenlaschen stehen soweit nach unten vor, dass sie das obere Trum der Rollenkette seitlich entlang der Laufschiene führen können, wobei die Laufschiene dazu in ihrer Breite kleiner ist als der Abstand der beiden Seitenlaschen eines Paares. Im unteren Bereich weist die aus Aluminium gefertigte Laufschiene einen Rücklaufkanal auf, in welchem das untere Trum der Rollenkette aufgenommen, geführt und vertikal abgestützt ist.

Die Problematik bei dem geschilderten Kettenförderer besteht darin, dass die Seitenlaschen der Rollenkette sowohl Zug- wie auch Führungskräfte aufnehmen müssen. Dadurch können die Seitenlaschen nicht durchgehend aus einem Grundmaterial hergestellt werden, welches gute, selbstschmierende Eigenschaften wie beispielsweise PTFE aufweist, sondern sie müssen zumindest teilweise aus einem hochfesten Material, beispielsweise Stahl, gefertigt werden. Diese Ausbildung bringt den Nachteil mit sich, dass die Reibwerte zwischen Rollenkette und Führungsschiene relativ hoch sind. Dies trifft insbesondere auch für das untere, im Rücklaufkanal aufgenommene Kettentrum zu, da hier von den Seitenlaschen zusätzlich das Eigengewicht der Rollenkette aufgenommen werden muss. Durch die hohen, zwischen zwischen Rollenkette und Tragschiene entstehenden Reibwerte, wird die Baulänge eines solchermassen ausgestalteten Kettenförderers beschränkt. Zudem hat sich gezeigt, dass durch die Zugbelastung auf den gleichzeitig als Führungsmitteln ausgebildeten Seitenlaschen die Reibungswiderstände zusätzlich erhöht werden.

Eine weitere Problematik des vorgängig geschilderten Kettenförderers besteht darin, dass die verwendeten Ketten nur Zugkräfte aufnehmen können. Sobald Schubkräfte auf die Kette einwirken, was beim Einlagern von Gütern immer der Fall ist, besteht die Gefahr, dass sich die Kette zusammenfaltet indem sich einzelne, auf Schub beanspruchte Kettenglieder gegeneinander verdrehen.

Insbesondere derjenige Kettenabschnitt, der sich zwischen der beim Einschieben befindlichen Palette und den bereits eingelagerten Gütern befindet, wird in hohem Masse auf Schub beansprucht. Die sich beim Einschieben befindliche Palette übt eine Zugkraft auf den hinter ihr befindlichen Kettenabschnitt aus, der um die vordere Umlenkung geführt wird. Da solche Umlenkungen jedoch aus Platzgründen einen sehr geringen Durchmesser aufweisen, haben diese einen schlechten Wirkungsgrad und eignen sich nicht für hohe Zugkräfte. Der um die Umlenkung umgelenkte Kettenzug wird über das elastische Gurtband an die hintere Umlenkung übertragen, die den Wirkungsgrad weiter verschlechtert, wobei zu berücksichtigen ist, dass die Masse der eingelagerten Güter bis zu 20 Tonnen betragen kann.

Es versteht sich, dass unter den geschilderten Umständen ein Zusammenfalten der Kette unerwünscht ist, da sich durch dieses Zusammenfalten die Gesamtlänge der Kette schlagertig verändert, was im Extremfall zum Reissen des Gurtbandes und zur Zerstörung der Umlenkungen führen kann. Ausserdem kann durch ein Zusammenfalten der Kette ein zum Schutz der eingelagerten Gütern allenfalls genau einzuhaltender Abstand verändert werden. Auch kann es passieren, dass, insbesondere leichte Güter, in demjenigen Bereich, in dem die Kette zusammengefaltet wird, angehoben und aus der horizontalen Lage verdreht werden.

Dieses Zusammenfalten ist bei herkömmlichen Ketten nicht zu vermeiden, da sich die Gesamtlänge der Ketten bzw. des umlaufenden Fördermittels, beispielsweise durch Temperaturänderungen oder durch Dehnung des Gurtbandes, relativ stark verändern kann.

Schliesslich sind aus der GB-A-495894 zwei weitere Ausführungsformen von Ketten bekannt. Das Ausführungsbeispiel gemäss den Fig. 1 bis 5 zeigt eine Kette, die durch zwei unterschiedlich ausgebildete Arten von Laschen gebildet wird. Beide Laschentypen sind U-förmig gestaltet, wobei die eine Lasche um mindestens das Doppelte der Wandstärke breiter ist als die andere Lasche, so dass die breitere Lasche die schmälere Lasche seitlich umfassen kann. Die schmälere dieser Laschen ist auf der Oberseite mit zwei Rollen versehen, welche sich durch den Basisteil hindurch erstrecken und die Laschen auf der Oberseite überragen. Die beiden Laschentypen sind mittels Scharnieren miteinander verbunden. Im gestreckten Zustand der Kette liegen die Stirnseiten der Laschen aneinander an.

Beim Ausführungsbeispiel gemäss den Fig. 6 bis 11 besteht jede Lasche aus zwei Seitenteilen. Der eine Laschentyp weist abgerundete Enden auf und ist an jedem Ende mit einer Bohrung versehen. Zwischen den beiden Bohrungen ist ein L-förmig gestalteter Anschlag vorgesehen ist. Der andere Laschentyp ist trapezförmig gestaltet und mit ebenfalls je einer Bohrung versehen. Die Enden dieses zweiten Laschentyps sind als Vorsprünge ausgebildet, welche sich beim Strecken einer durch derartige Laschen gestalteten Kette am jeweiligen Anschlag der angrenzenden Lasche anlegen und die Übertragung von Schubkräften ermöglichen. Die vorgesehenen Tragrollen überragen die Oberseite der jeweiligen Lasche ebenfalls.

Es ist somit die Aufgabe der Erfindung, einen Kettenförderer der im Oberbegriff des Anspruchs 1 beschriebenen Art derart zu verbessern, dass die Kette auch Schubkräfte aufnehmen und übertragen kann, wobei der Kettenförderer einfach aufgebaut und preisgünstig herstellbar sein soll.
Diese Aufgabe wird durch die im Kennzeichen des Anspruchs 1 aufgeführten Merkmale gelöst.

Durch das Vorsehen von Laschen, welche über Anschläge verfügen, die die gegenseitige, über einen vorbestimmten Winkel hinausgehende Drehbewegung benachbarter Laschen derart begrenzen, dass die Rollenkette Schubkräfte übertragen kann, wird die Gefahr des Zusammenfaltens einzelner Abschnitte der Kette gebannt und die damit verbundenen Nachteile vermieden.

Bevorzugte Ausführungsformen der Erfindung sind in den abhängigen Ansprüchen 2 bis 9 umschrieben.

Eine weitere Aufgabe der Erfindung besteht darin, einen Kettenförderer vorzuschlagen, der mit Mitteln zum seitlichen Führen der Rollenkette ausgebildet ist, welche einfach angeordnet und kostengünstig gefertigt werden können, wobei die Führungsmittel mit sehr geringen Reibungswiderständen zwischen Rollenkette und Tragschiene aufwarten sollen.

Diese Aufgabe wird durch die im Kennzeichen des Anspruchs 10 aufgeführten Merkmale gelöst.

Die Erfindung wird nachfolgend anhand von Zeichnungen näher erläutert. In diesen Zeichungen zeigt/zeigen:
- Fig. 1 bis 3: eine einzelne Lasche für eine Rollenkette in drei unterschiedlichen Ansichten;
- Fig. 4 bis 6: ein Führungselement für die Rollenkette in drei unterschiedlichen Ansichten;
- Fig. 7 bis 9: einen Mitnehmer für die Rollenkette in drei unterschiedlichen Ansichten;
- Fig. 10: einen Querschnitt durch eine Tragschiene sowie durch die Rollenkette.
- Fig. 11: eine Draufsicht auf einen Abschnitt einer Rollenkette, welche mit Laschen gemäss den Fig. 1 bis 3 versehen ist;
- Fig. 12: den Abschnitt der Rollenkette gemäss Fig. 11 in einer Seitenansicht;

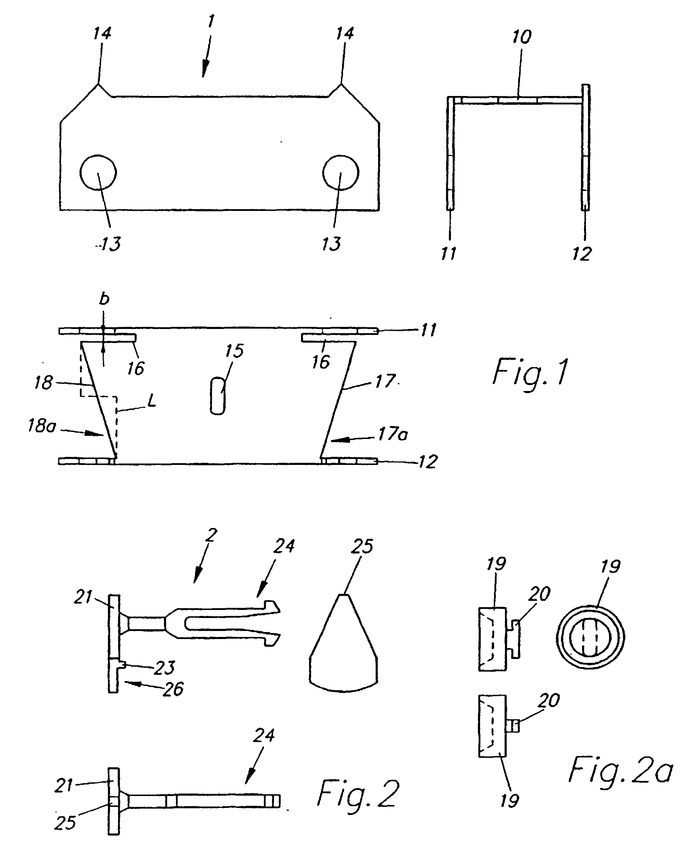

Die Fig. 1 bis 3 zeigen eine Lasche 1 für eine Rollenkette in einem Aufriss, einem Seitenriss und einem Grundriss. Die Lasche rungen 13 versehen, welche der Aufnahme von je einer Welle zur Verbindung der Laschen 1 sowie zur Lagerung und Abstützung von Tragrollen dienen.

Der Basisteil 10 der Lasche 1 ist mit zwei entlang des einen Schenkels 11 angeordneten Aussparungen 16 versehen, deren Breite b2 grösser als die Wandstärke eines Schenkels 11, 12 ist. Durch diese Aussparungen 16 wird das Zusammenfügen von mehreren, einheitlich ausgebildeten Laschen 1 zu einer Kette begünstigt, indem ein Schenkel 11, 12 einer vorhergehenden oder nachfolgenden, um jeweils 180° um die Hochachse verdrehten, Lasche 1 in eine solche Aussparung 16 eingreift.

Der Basisteil 10 ist zudem mit einem quer zu dessen Längsachse verlaufenden Schlitz 15 versehen. Dieser Schlitz 15 dient der Aufnahme eines aus einem elastischen Material gefertigten Mitnehmers, wie nachfolgend anhand der Fig. 2a noch näher erläutert wird.

Die Grundform einer solchen Lasche 1 wird vorzugsweise durch Stanzen hergestellt, währenddem die U-förmige Gestaltung durch anschliessendes Biegen des ausgestanzten Teils erzeugt wird.

Die beiden Endbereiche 17, 18 des Basisteils 10 einer Lasche 1 sind vorzugsweise schräg ausgebildet. Andererseits können die beiden Endbereiche des Basisteils auch mit einer Stufung versehen sein, wie dies durch unterbrochen eingezeichnete Linien L angedeutet ist.

Der eine Schenkel 12 ist mit zwei die Oberseite des Basisteils 10 überragenden Erhebungen 14 versehen, wobei aus fertigungstechnischen Gründen jeweils der dem kürzeren Bereich 17a, 18a des Basisteils 10 angrenzende Schenkel 12 solche Erhebungen 14 aufweist.

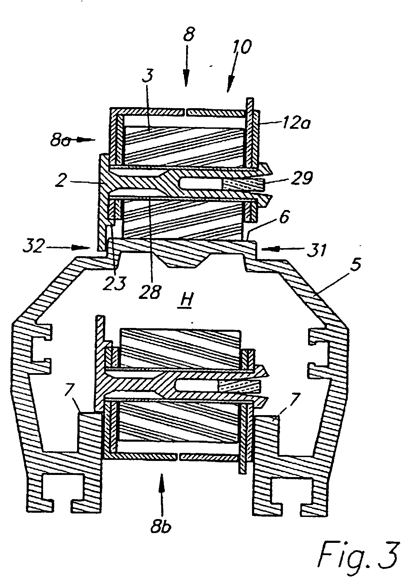

In der Fig. 2 ist ein Führungselement 2 für die Rollenkette in drei unterschiedlichen Ansichten dargestellt. Dieses Führungselement 2 besteht im wesentlichen aus einer Führungsplatte 21 sowie einem Klemmteil 24. Auf der Innenseite der Führungsplatte 21 ist eine Leiste 23 angeformt. Der untere Bereich 26 der Führungsplatte 21 dient der seitlichen Führung der Rollenkette währenddem die Führungsplatte 21 auf der Oberseite eine Auflagefläche 25 aufweist, welche bei einer umlaufenden Kette zum Abstützen des unteren Kettentrums ausgebildet ist. Die Funktionsweise dieser Führungsplatte 21 wird nachfolgend anhand der Fig. 3 noch näher erläutert.

Fig. 2a zeigt den Mitnehmer 19 in einem Aufriss, einem Seitenriss sowie einem Grundriss. Der vorzugsweise aus Gummi gefertigte Mitnehmer 19 dient als Auflage für auf den Laschen abzustützende Güter. Zum Fixieren in dem im Basisteil der Lasche eingelassenen Schlitz weist der Mitnehmer 19 einen Halteteil 15 auf, der korrespondierend zu diesem Schlitz ausgebildet ist. Zum Fixieren wird der Halteteil 15 durch den Schlitz geführt und der Mitnehmer danach um 90° verdreht. Der Mitnehmer 19 überragt die Erhebungen der Lasche vorzugsweise geringefügig, so dass leichte Güter nicht auf den Erhebungen sondern auf dem Mitnehmer aufliegen. Durch die elastische Ausbildung des Mitnehmers 19 wird jedoch sichergestellt, dass schwere Güter den Mitnehmer zusammenstauchen und dadurch auf den Erhebungen aufstehen, wodurch eine sichere, kraftschlüssige Verbidung zwischen Lasche und einzulagernden Gütern -Palette- sichergestellt ist.

Die Fig. 3 zeigt einen Querschnitt durch eine Tragschiene 5 sowie eine Rollenkette 8. Die Tragschiene 5 weist auf der Oberseite eine nach oben abgesetzte Lauffläche 6 auf, welche seitlich von zwei Führungsflächen begrenzt wird. Auf der Unterseite ist die Tragschiene 5 mit einem nach unten offenen Hohlraum H versehen, in dem zwei Hilfsschienen 7 angeordnet sind, auf welchen die Führungsplatten 21 der Führungselemente 2 mit ihren Auflageflächen 25 aufliegen und das untere Kettentrum 8b vertikal abstützen.

Die Rollenkette 8 wird durch eine Vielzahl von gemäss Fig. 1 ausgebildeten Laschen 1 sowie Tragrollen 3 gebildet, wobei jeweils zwei Laschen mittels einer Welle 28 gelenkig miteinander verbunden sind. Die Wellen 28 dienen gleichzeitig auch der Lagerung der Tragrollen 3. Durch die jeweilige Welle 28 ist ein Führungselement 2 hindurchgeführt, welches die Lasche 1 auf der einen Seite nach unten überragt. Auf der anderen Seite hintergreift der Klemmteil 24 des Führungselements 2 den Schenkel 12a, wodurch sowohl die Welle 28 wie auch das Führungselement 2 in der hier dargestellten Position fixiert werden. Zur Sicherung des Führungselements 2 kann zudem, wie dargestellt, ein Sicherungsbolzen 29 vorgesehen werden, der selbsthemmend verankert ist. Um aus den einheitlichen Laschen 1 eine Kette zu bilden, sind diese wechselweise um 180° um ihre Hochachse verdreht angeordnet, wobei die eine gegenüber der anderen Lasche, in Längsrichtung der Rollenkette gesehen, um jeweils die Wandstärke eines Schenkels einer Lasche versetzt ist. Nebst den Laschen 1 sind auch die Führungselemente 2 wechselweise um 180° verdreht angeordnet, d.h. mit anderen Worten, die Führungselemente 2 werden wechselweise einmal von links und einmal von rechts durch die jeweilige Welle 28 hindurchgeschoben, so dass die Rollenkette 8 auf beiden Seiten der Lauffläche 6 geführt wird. Die Leiste 23 des Führungselements 2 erstreckt sich entlang der Unterseite des jeweiligen Schenkels einer Lasche, und verhindert ein Verdrehen des Führungslements 2, wobei die Höhe der Leiste 23 in etwa der Wandstärke eines Schenkels einer Lasche entspricht. Anzufügen ist, dass die Rollenkette 8 nur ca. 60% des umlaufenden Fördermittels bildet, währenddem die restlichen 40% aus einem Gurtband bestehen, das an den beiden Kettenenden fixiert ist.

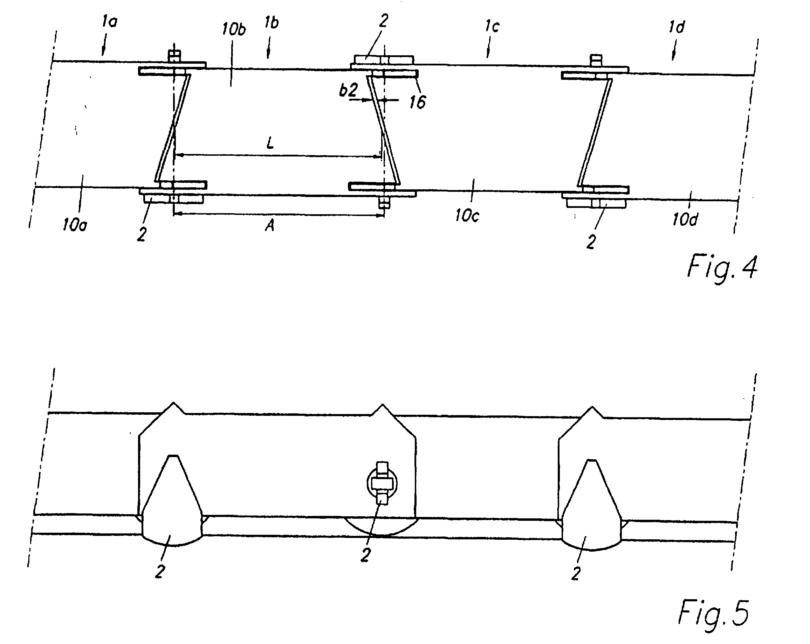

Fig. 4 zeigt eine Draufsicht auf einen Abschnitt einer Rollenkette, welche mit einheitlichen Laschen 1 gemäss Fig 1 sowie Führungselementen 2 gemäss Fig. 2 versehen ist. Aus dieser Darstellung ist ersichtlich, dass die Laschen 1a, 1b, 1c, 1d wechselweise um 180° um ihre Hochachse verdreht angeordnet sind, und dass die eine gegenüber der anderen Lasche 1a, 1b, 1c, 1d, in Längsrichtung der Rollenkette 8 gesehen, um jeweils die Wandstärke eines Schenkels einer Lasche 1a, 1b, 1c, 1d versetzt - ist, so dass jeweils der eine Schenkel 11, 12 einer Lasche in die Ausnehmung 16 (Fig. 1) im Basisteil der benachbarten Lasche eingreift. Diese Ausbildung erlaubt, dass die Laschen 1a, 1b, 1c, 1d, auch Seitenkräfte aufnehmen und übertragen können.

Im weiteren ist ersichtlich, dass die mittlere Länge L des Basisteils 10 zumindest annähernd dem Achsabstand A zwischen zwei benachbarten Tragrollen 3 entspricht. Der Basisteil 10 ist vorzugsweise um ca. 0.5 bis 3 mm kürzer als der Achsabstand zwischen zwei benachbarten Tragrollen 3, so dass im gestreckten Zustand der Kette zwischen den Stirnseiten benachbarter Basisteile 10b, 10c von benachbarten Laschen 1b, 1c ebenfalls ein Spalt b in der Grössenordnung von 0.5 bis 3 mm entsteht. Diese Ausbildung bewirkt, dass die gegenseitige, über einen vorbestimmten Winkel hinausgehende Drehbewegung benachbarter Laschen begrenzt wird, indem sich beim gegenseitigen Zurückdrehen der Laschen die Stirnseiten benachbarter Basisteile aneinander anlegen. wichtig in diesem Zusammenhang ist, dass die Stirnseiten benachbarter Basisteile von benachbarten Laschen korrespondierend ausgebildet sind. Eine derartige ausgebildete Rollenkette kann somit Schubkräfte übertragen, ohne dass die Gefahr besteht, dass sich die Kette auf einzelnen Abschnitten zusammenfaltet.

Fig. 5 zeigt den Abschnitt der Rollenkette gemäss Fig. 4 in einer Seitenansicht. Aus dieser Darstellung sind die wechselweise angeordneten Führungselemente 2 ersichtlich, welche die Laschen nach unten überragen.

Ein derartig ausgestalteter Kettenförderer ist sehr einfach aufgebaut und kann presigünstig hergestellt werden, da sowohl die Laschen wie auch die Führungselemente einheitlich ausgebildet sind. Durch das Vorsehen von Anschlägen, welche die gegenseitige, über einen vorbestimmten Winkel hinausgehende Drehbewegung benachbarter Laschen in der vorgängig beschriebenen Weise begrenzen, kann die Rollenkette auch Schubkräfte übertragen.

## Patentansprüche

1. Kettenförderer mit einer Rollenkette (8) und einer Tragschiene (5) zum vertikalen Abstützen der Rollenkette (8), wobei die Rollenkette (8) eine Vielzahl von Tragrollen (3) aufweist, welche mittels Laschen (1) miteinander verbunden sind, und wobei die Laschen (1) Anschläge aufweisen, welche die gegenseitige, Ober einen vorbestimmten Winkel hinausgehende Drehbewegung benachbarter Laschen (1) derart begrenzen, dass die Rollenkette (8) Schubkräfte übertragen kann, **dadurch gekennzeichnet, dass** die Laschen (1) zwei Schenkel (11, 12) mit einem dazwischen liegenden Basisteil (10) aufweisen, dessen mittlere Länge (L) zumindest annähernd dem Achsabstand (A) von zwei benachbarten Tragrollen (3) entspricht, dass die Stirnseiten (17, 18) benachbarter Basisteile (10) von benachbarten Laschen (1) korrespondierend ausgebildet sind und als Anschläge wirken, und dass der Basisteil (10) mit zwei entlang eines Schenkels (11, 12) angeordneten Aussparungen (16) versehen ist, deren Breite (b) grösser ist als die Wandstärke eines Schenkels (11, 12).

2. Kettenförderer nach Anspruch 1, **dadurch gekennzeichnet, dass** der überwiegende Teil der Laschen (1) U-förmig ausgebildet ist.

3. Kettenförderer nach Anspruch 2, **dadurch gekennzeichnet, dass** im gestreckten Zustand der Rollenkette (8), zwischen den Stirnseiten benachbarter Laschen, ein Spalt (b) von weniger als 5% der Länge einer Lasche (1) besteht.

4. Kettenförderer nach Anspruch 2 oder 3, **dadurch gekennzeichnet, dass** der Basisteil (10) der Laschen (1) als obere Abdeckung der Rollenkette (8) ausgebildet ist und im gestreckten Zustand der Rollenkette (8) sowohl die Tragrollen (4) wie auch die Tragschiene (5) vor Verschmutzung schützen.

5. Kettenförderer nach einem der Ansprüche 2 bis 4, **dadurch gekennzeichnet, dass** die beiden Endbereiche (17, 18) des Basisteils (10) einer Lasche (1) eine Stufung aufweisen und/oder schräg ausgebildet sind.

6. Kettenförderer nach Anspruch 5, **dadurch gekennzeichnet, dass** die Laschen (1) einstückig ausgebildet sind, und dass der dem kürzeren Bereich (17a, 18a) des Basisteils (10) angrenzende Schenkel (12) mit einer die Oberseite des Basisteils (10) überragenden Erhebung (14) versehen ist.

7. Kettenförderer nach einem der Ansprüche 2 bis 6, **dadurch gekennzeichnet, dass** der Basisteil (10) der Laschen (1) auf der Oberseite als Auflagefläche für auf der Rollenkette (8) zu fördernde Güter ausgebildet ist.

8. Kettenförderer nach einem der vorhergehenden Ansprüche, **dadurch gekennzeichnet, dass** die Rollenkette (8) aus einheitlichen Laschen (1) besteht, welche eine von einer zentralsymmetrischen Gestaltung abweichende Geometrie aufweisen, und dass die Laschen (1a, 1b, 1c, 1d) wechselweise um 180° um ihre Hochachse verdreht angeordnet sind, wobei die eine gegenüber der anderen Lasche (1a, 1b, 1c, 1d), in Längsrichtung der Rollenkette (8) gesehen, um jeweils die Wandstärke eines Schenkels (11, 12) einer Lasche (1) versetzt ist.

9. Kettenförderer nach einem der vorhergehenden Ansprüche, **dadurch gekennzeichnet, dass** der Basisteil (10) mit einem quer zur Bewegungsrichtung der Rollenkette (8) verlaufenden Schlitz (15) versehen ist, und dass ein aus einem elastischen Material gefertigter Mitnehmer (19) vorgesehen ist, welcher mit einem korrespondierend zu diesem Schlitz ausgebildeten Halteteil (20) versehen ist, der durch den Schlitz (15) führbar und durch eine anschliessen Drehung um 90° im Basisteil (10) fixierbar ist.

10. Kettenförderer nach Anspruch 1, wobei die Laschen (1) der Rollenkette (8) mittels einer Welle (28) gelenkig miteinander verbunden sind, und wobei die Welle (28) gleichzeitig als Tragachse für die Tragrollen (3) ausgebildet ist, **dadurch gekennzeichnet, dass** die Welle (28) hohl ist, und dass durch die Welle (28) ein diskret ausgebildetes Führungselement (2) hindurchgeführt ist, welches die Lasche (10) zumindest auf einer Seite nach unten zur Führungsschiene (5) hin überragt.

11. Kettenförderer nach Anspruch 10, **dadurch gekennzeichnet, dass** das Führungselement (2) mit einer zur Lasche (10) zu richtenden Leiste (23) versehen ist, welche sich entlang der Unterseite des Schenkels einer Lasche (10) erstreckt, wobei die Höhe der Leiste (23) maximal der Wandstärke eines Schenkels (11, 12) einer Lasche (10) entspricht.

12. Kettenförderer nach Anspruch 10 oder 11, **dadurch gekennzeichnet, dass** die Tragschiene (5) auf der Oberseite eine Lauffläche (6) aufweist, welche seitlich von zwei tiefer liegenden Führungsflächen (31, 32) begrenzt wird, und dass jedes Führungselement (2) zumindest ein seitliches Führungsglied (21) aufweist, welches mit den Führungsflächen (31, 32) zusammenzuarbeiten bestimmt ist.

13. Kettenförderer nach einem der Ansprüche 10 bis 12, **dadurch gekennzeichnet, dass** die Führungselemente (2) aus einem Kunststoff gefertigt sind, welcher gute, selbstschmierende Eigenschaften aufweist.

14. Kettenförderer nach einem der Ansprüche 10 bis 13, mit endseitig angeordneten Umlenkvorrichtungen zum Umlenken der Rollenkette (8) und zur Unterteilung derselben in ein oberes und ein unteres Kettentrum (8a, 8b), wobei die Tragschiene (5) auf ihrer Unterseite einen das untere Kettentrum (8b) zumindest teilweise aufnehmenden Hohlraum (H) aufweist, **dadurch gekennzeichnet, dass** die Führungselemente (2) die Laschen (1) des oberen Kettentrums (8a) sowohl nach unten zur Führungsschiene (5) hin wie auch zumindest auf einer Seite überragen, wobei der die Laschen (1) nach unten überragende Bereich (26) der Führungselemente (2) zur Führung des oberen Kettentrums (8a) ausgebildet ist, und wobei das Führungselement (2) in dem die Laschen (1) seitlich überragenden Bereich eine Führungsfläche (25) zur Führung und vertikalen Abstützung des unteren, zumindest teilweise im Hohlraum (H) aufgenommenen Kettentrums (8b) aufweist.

15. Kettenförderer nach einem der vorhergehenden Ansprüche, **dadurch gekennzeichnet, dass** beide Enden der Rollenkette (8) mittels eines Gurtbandes zu einem umlaufenden, endlosen Fördermittel verbunden sind, wobei die Länge der Rollenkette (8) höchstens 60% des gesamten Fördermittels beträgt.

## Claims

1. Chain conveyer with a roller chain (8) and a supporting rail (5) for vertically supporting the roller chain (8), the roller chain (8) having a multiplicity of supporting rollers (3) which are connected to one another by means of clips (1), the clips (1) having stops which delimit the rotational movement of adjacent clips (1) with respect to one another beyond a predetermined angle, in such a way that the roller chain (8) can transmit thrust forces, **characterized in that** the clips (1) have two limbs (11, 12) with a base part (10) lying between them, the central length (L) of which corresponds at least approximately to the axle spacing (A) between two adjacent supporting rollers (3), **in that** the end sides (17, 18) of adjacent base parts (10) are correspondingly formed by adjacent clips (1) and act as stops, and **in that** the base part (10) is provided with two recesses (16) which are arranged along a limb (11, 12) and whose width (b) is greater than the thickness of the wall of a limb (11, 12).

2. Chain conveyer according to Claim 1, **characterized in that** the greater part of the clips (1) are of U-shaped construction.

3. Chain conveyer according to Claim 2, **characterized in that**, in the stretched state of the roller chain (8), there is a gap (b) of less than 5% of the length of a clip (1) between the end sides of adjacent clips.

4. Chain conveyer according to Claim 2 or 3, **characterized in that** the base part (10) of the clips (1) is embodied as an upper cover of the roller chain (8), and in the extended state of the roller chain (8) protects both the supporting rollers (4) and the supporting rail (5) against soiling.

5. Chain conveyer according to one of Claims 2 to 4, **characterized in that** the two end regions (17, 18) of the base part (10) of a clip (1) have a step and/or of oblique construction.

6. Chain conveyer according to Claim 5, **characterized in that** the clips (1) are constructed in one piece, and **in that** the limb (12) which adjoins the shorter region (17a, 18a) of the base part (10) is provided with an elevation (14) which projects beyond the upper side of the base part (10).

7. Chain conveyer according to one of Claims 2 to 6, **characterized in that** that the base part (10) of the clips (1) is embodied on the upper side as a supporting face for goods which are to be conveyed on the roller chain (8).

8. Chain conveyer according to one of the preceding claims, **characterized in that** the roller chain (8) is composed of uniform clips (1) which have a geometry which differs from a centrally symmetrical configuration, and **in that** the clips (1a, 1b, 1c, 1d) are arranged alternately rotated through 180° about their vertical axis, the one clip (1a, 1b, 1c, 1d) being displaced with respect to the other clip (1a, 1b, 1c, 1d) by in each case the thickness of the wall of a limb (11, 12) of a clip (1), viewed in the longitudinal direction of the roller chain (8).

9. Chain conveyer according to one of the preceding claims, **characterized in that** the base part (10) is provided with a slit (15) which runs transversely with respect to the direction of movement of the roller chain (8), and **in that** a driver (19) is provided which is fabricated from an elastic material and is provided with a holding part (20) which is constructed so as to correspond to this slit and can be inserted through the slit (15) and secured in the base part (10) by means of a subsequent rotation through 90°.

10. Chain conveyer according to Claim 1, the clips (1) of the roller chain (8) each being connected to one another in an articulated fashion by means of a shaft (28) and the shaft (28) being simultaneously embodied as a supporting axis for the supporting rollers (3), **characterized in that** the shaft (28) is hollow and **in that** a discretely constructed guide element (2) which projects downwards beyond the clip (10) towards the guide rail (5) at least on one side is passed through the shaft (28).

11. Chain conveyer according to Claim 10, **characterized in that** the guide element (2) is provided with a bar (23) which is to be oriented with respect to the clip (10) and which extends along the underside of the limb of a clip (10), the height of the bar (23) corresponding at maximum to the thickness of the wall of a limb (11, 12) of a clip (10).

12. Chain conveyer according to Claim 10 or 11, **characterized in that** the supporting rail (5) has, on the upper side, a running surface (6) which is bounded laterally by two lower lying guide surfaces (31, 32) and **in that** each guide element (2) has at least one lateral guide member (21) which is intended to co-operate with the guide surfaces (31, 32).

13. Chain conveyer according to one of Claims 10 to 12, **characterized in that** the guide elements (2) are fabricated from a plastic which has good self-lubricating properties.

14. Chain conveyer according to one of Claims 10 to 13, with deflection devices which are arranged at the end sides for the purpose of deflecting the roller chain (8) and for dividing it into an upper chain strand (8a) and a lower chain strand (8b), the supporting rail (5) having on its underside a cavity (H) which at least partially accommodates the lower chain strand (8b), **characterized in that** the guide elements (2) project downwards beyond the clips (1) of the upper chain strand (8a) towards the guide rail (5) and also at least on one side, the region (26) of the guide element (2) which projects downward beyond the clips (1) being designed to guide the upper chain strand (8a), and the guide element (2) having in the region which projects laterally beyond the clips (1) a guide surface (25) for guiding and vertically supporting the lower chain strand (8b) which is accommodated at least partially in the cavity (H).

15. Chain conveyer according to one of the preceding claims, **characterized in that** both ends of the roller chain (8) are connected by means of a belt to form a circulating, endless conveying means, the length of the roller chain (8) being at maximum 60% of the entire conveying means.

## Revendications

1. Transporteur à chaîne muni d'une chaîne à rouleaux (8) et d'un profilé support (5) pour l'appui vertical de la chaîne à rouleaux (8), moyennant quoi, la chaîne à rouleaux (8) comporte une pluralité de rouleaux porteurs (3) qui sont reliés les uns aux autres au moyen d'attaches (1), et moyennant quoi, les attaches (1) comportent des butées qui limitent le mouvement de rotation réciproque des attaches voisines (1) dépassant un angle prédéterminé, de telle sorte que la chaîne à rouleaux (8) peut transmettre des poussées, **caractérisé en ce que** les attaches (1) comportent deux côtés latéraux (11, 12) avec un élément de base (10) se trouvant entre eux dont la longueur moyenne (L) correspond au moins approximativement à la distance axiale (A) de deux rouleaux porteurs voisins (3), que les faces avant (17, 18) des éléments de base (10) des attaches voisines (1) sont formées de manière correspondante et agissent en tant que butées, et **en ce que** l'élément de base (10) est pourvu de deux évidements (16) disposés le long d'un côté (11, 12) dont la largeur (b) est plus grande que l'épaisseur murale d'un côté (11, 12).

2. Transporteur à chaîne selon la revendication 1, **caractérisé en ce que** l'élément principal des attaches (1) a la forme d'un U.

3. Transporteur à chaîne selon la revendication 2, **caractérisé en ce que** à l'état étendu de la chaîne à rouleaux (8), entre les faces avant des attaches voisines se trouve une fente (b) inférieure à 5% de la longueur d'une attache (1).

4. Transporteur à chaîne selon la revendication 2 ou 3, **caractérisé en ce que** l'élément de base (10) des attaches (1) est formé en tant que revêtement supérieur de la chaîne à rouleaux (8) et qu'à l'état étendu de la chaîne à rouleaux (8), aussi bien les rouleaux porteurs (4) que le profilé support (5) sont protégés de l'encrassement.

5. Transporteur à chaîne selon l'une quelconque des revendications 2 à 4, **caractérisé en ce que** les deux zones d'extrémité (17, 18) de l'élément de base (10) d'une attache (1) comportent un aménagement en gradins et/ou sont de forme oblique.

6. Transporteur à chaîne selon la revendication 5, **caractérisé en ce que** les attaches (1) sont formées en une seule pièce, et **en ce que** le côté (12) avoisinant la zone (17a, 18a) la plus courte de l'élément de base (10) est pourvue d'une élévation (14) dépassant la face supérieure de l'élément de base (10).

7. Transporteur à chaîne selon l'une quelconque des revendications 2 à 6, **caractérisé en ce que** l'élément de base (10) est formé sur la face supérieure en tant que surface d'appui pour des produits devant être transportés sur la chaîne à rouleaux (8).

8. Transporteur à chaîne selon l'une quelconque des revendications précédentes, **caractérisé en ce que** la chaîne à rouleaux (8) se compose d'attaches uniformes (1) qui présentent une géométrie déviant d'une forme ayant une symétrie de centre, et **en ce que** les attaches (1a, 1B, 1c, 1d) sont disposées de manière alternative tournées à 180° autour de leur axe vertical, moyennant quoi, l'une est déplacée par rapport à l'autre attache (1a, 1b, 1c, 1d), vu dans le sens longitudinal de la chaîne à rouleaux (8), chaque fois autour de l'épaisseur murale d'un côté (11, 12) d'une attache (1).

9. Transporteur à chaîne selon l'une quelconque des revendications précédentes, **caractérisé en ce que** l'élément de base (10) est pourvu d'une fente (15) s'étendant transversalement par rapport au sens du déplacement de la chaîne à rouleaux (8), et **en ce que** un poussoir (19) fabriqué à partir d'un matériau élastique est prévu, lequel est pourvu d'un élément d'arrêt (20) formé en correspondance avec cette fente, lequel élément peut être guidé à travers la fente et fixé à l'élément de base (10) par une rotation de raccordement à 90°.

10. Transporteur à chaîne selon la revendication 12, moyennant quoi, les attaches (1) de la chaîne à rouleaux (8) sont reliées les unes aux autres de manière articulée au moyen d'un arbre (28), et moyennant quoi, l'arbre (28) est formé en même temps en tant qu'essieu porteur pour les rouleaux porteurs (3), **caractérisé en ce que** l'arbre (28) est creux, et **en ce que** un élément de guidage (2) formé discrètement est passé à travers l'arbre, lequel élément de guidage dépasse en direction du bas par rapport au rail-guide (5) au moins sur un côté.

11. Transporteur à chaîne selon la revendication 10, **caractérisé en ce que** l'élément de guidage (2) est pourvu d'une barre de guidage (23) devant être orientée par rapport à l'attache (10), laquelle barre s'étend le long de la face inférieure du côté d'une attache (10), moyennant quoi, la hauteur de la barre de guidage (23) correspond au maximum à l'épaisseur murale d'un côté (11, 12) d'une attache (10).

12. Transporteur à chaîne selon la revendication 10 ou 11, **caractérisé en ce que** le profilé support (5) comporte sur la face supérieure une surface de roulement (6) qui est limitée latéralement par deux surfaces de guidage (31, 32) situées plus profondément, et **en ce que** chaque élément de guidage (2) comporte au moins un élément de guidage latéral (21) qui est défini pour coopérer avec les surfaces de guidage (31, 32).

13. Transporteur à chaîne selon l'une quelconque des revendications 10 à 12, **caractérisé en ce que** les éléments de guidage (2) sont réalisés en matière plastique qui comporte de bonnes propriétés d'autolubrification.

14. Transporteur à chaîne selon l'une quelconque des revendications 10 à 13, pourvu de dispositifs de déviation disposés sur l'extrémité finale permettant de dévier la chaîne à rouleaux (8) et de diviser cette dernière en un brin de chaîne (8a, 8b) supérieur et inférieur, moyennant quoi, le profilé support (5) comporte sur sa face inférieure une cavité (H) recevant au moins partiellement le brin de chaîne inférieur (8b), **caractérisé en ce que** les éléments de guidage (2) dépassent les attaches (1) du brin de chaîne (8a) supérieur aussi bien en direction du bas par rapport au rail-guide (5) qu'au moins sur un côté, moyennant quoi, la zone (26) des éléments de guidage (2) dépassant les attaches (1) en direction du bas est formée pour guider le brin de chaîne (8a) supérieur, et moyennant quoi l'élément de guidage (2) comporte une surface de guidage dans la zone dépassant latéralement les attaches (1) permettant de guider et de supporter le brin de chaîne (B) inférieur reçu au moins partiellement dans la cavité (H).

15. Transporteur à chaîne selon l'une quelconque des revendications précédentes, **caractérisé en ce que** les deux extrémités de la chaîne à rouleaux (8) sont reliées au moyen d'une sangle à un moyen de transport rotatif et sans fin, moyennant quoi, la longueur de la chaîne à rouleaux (8) fait au maximum 60% de l'ensemble du moyen de transport.
